# EUROPÄISCHE PATENTANMELDUNG

(11) **EP 1 187 440 A2**
(43) Veröffentlichungstag der Anmeldung: **13.03.2002**
(21) Anmeldenummer: 01000414.1
(22) Anmeldetag: 31.08.2001
(51) Int. Cl.: H04M 3/493, G10L 15/22, G10L 15/18

(54) **Sprachdialogsystem**

(30) Priorität: 05.09.2000 DE 10043531
(71) Anmelder: Philips Corporate Intellectual Property GmbH, 52064 Aachen (DE); Koninklijke Philips Electronics N.V., 5621 BA Eindhoven (NL)
(72) Erfinder: Souvignier, Bernd, 52064 Aachen (DE)
(74) Vertreter: Volmer, Georg, Dipl.-Ing.

(57) **Zusammenfassung**

Die Erfindung betrifft ein Sprachdialogsystem (1). Um für ein breites Spektrum an Formulierungsalternativen bei Spracheingaben ein möglichst sicheres Identifizieren bedeutungstragender Teilwortfolgen zu gewährleisten, enthält das Sprachdialogsystem eine Sprachverstehenseinheit (4), bei der zur Identifizierung einer bedeutungstragenden Teilwortfolge aus einem von einer Spracherkennungseinheit (3) gelieferten Erkennungsergebnis, das für eine dem Sprachdialogsystem (1) zugeführte Wortfolge ermittelt wurde, eine Bewertung der Teilwortfolge mittels unterschiedlicher Sprachmodelle (8) vorgesehen ist.

## Beschreibung

Die Erfindung betrifft ein Sprachdialogsystem, z. B. ein automatisches Auskunftssystem.

Ein solches Dialogsystem ist aus A. Kellner, B. Rüber, F. Seide und B. H. Tran, "PADIS - AN AUTOMATIC TELEPHONE SWITCHBOARD AND DIRECTORY INFORMATION SYSTEM", Speech Communication, vol. 23, Seiten 95-111, 1997 bekannt. Hier werden über eine Schnittstelle zu einem Telefonnetz Sprachäußerungen eines Benutzers empfangen. Vom Dialogsystem wird als Reaktion auf eine Spracheingabe eine Systemantwort (Sprachausgabe) generiert, die an den Benutzer über die Schnittstelle und hier weiterhin über das Telefonnetz übertragen wird. Spracheingaben werden von einer auf Hidden Markov Modellen (HMM) basierenden Spracherkennungseinheit in einen Wortgraphen umgesetzt, der in komprimierter Form verschiedene Wortfolgen angibt, die als Erkennungsergebnis für die empfangene Sprachäußerung in Frage kommen.
Der Wortgraph definiert feste Wortgrenzen, die durch ein oder mehrere Kanten verbunden sind. Einer Kante ist jeweils ein Wort und ein von der Spracherkennungseinheit ermittelter Wahrscheinlichkeitswert zugeordnet. Die verschiedenen Pfade durch den Wortgraphen stellen die möglichen Erkennungsergebnisalternativen dar. In einer Sprachverstehenseinheit werden durch Verarbeitung des Wortgraphen die für die Anwendung relevanten Informationen ermittelt. Hierzu wird eine Grammatik eingesetzt, die syntaktische und semantische Regeln umfasst. Die verschiedenen sich aus dem Wortgraphen ergebenden möglichen Wortfolgen werden mittels eines die Grammatik verwendenden Parsers in Konzeptfolgen umgesetzt, wobei ein Konzept sich über ein oder mehrere Worte des Wortgraphen erstreckt und eine Teilwortfolge (Wortphrase) zusammenfasst, die entweder eine für die jeweilige Anwendung des Dialogsystems relevante Information trägt oder im Fall eines sogenannten Filler-Konzeptes eine Teilwortfolge repräsentiert, die für die jeweilige Anwendung bedeutungslos ist. Die sich so ergebenden Konzeptfolgen werden schließlich in einen Konzeptgraphen umgesetzt, um die möglichen Konzeptfolgen in komprimierter und leicht zu verarbeitender Form vorliegen zu haben. Den Kanten des Konzeptgraphen sind wiederum Wahrscheinlichkeitswerte zugeordnet, die von den zugehörigen Wahrscheinlichkeitswerten des Wortgraphen abhängig and. Aus dem optimalen Pfad durch den Konzeptgraphen werden schließlich die anwendungsrelevanten semantischen Informationen, die durch sogenannte Attribute in den semantischen Regeln der Grammatik repräsentiert sind, extrahiert. Eine Dialogkontrolleinheit wertet die von der Sprachverstehenseinheit ermittelten Informationen aus und generiert eine geeignete Antwort an den Benutzer, wobei die Dialogkontrolleinheit auf eine Datenbank mit anwendungsspezifischen Daten (hier: für die Telefonauskunftsanwendung spezifische Daten) zugreift.

Derartige Dialogsysteme lassen sich beispielsweise auch für Bahnauskunftssysteme einsetzen, wobei lediglich die Grammatik und die anwendungsspezifischen Daten in der Datenbank anzupassen sind. Ein derartiges Dialogsystem ist in H. Aust, M. Oerder, F. Seide, V. Steinbiß, "A SPOKEN LANGUAGE INQUIRY SYSTEM FOR AUTOMATIC TRAIN TIMETABLE INFORMATION", Philips J. Res. 49 (1995), Seiten 399-418 beschrieben.

Bei einem solchen System wird beispielsweise aus einer Teilwortfolge "um zehn Uhr dreißig" die zugehörige semantische Information "630 Minuten nach Mitternacht" auf folgende Weise mittels einer Grammatik abgeleitet, wobei eine syntaktische und eine semantische Regel wie folgt zur Anwendung kommt:
<Uhrzeit> ::= um <Zahl_24> Uhr <Zahl_60> (syntaktische Regel)
<Uhrzeit>.val := 60*<Zahl_24>.val + <Zahl_60>.val (semantische Regel)

<Zahl_24> steht für alle Zahlwörter zwischen 0 und 24 und <Zahl_60> für alle Zahlwörter zwischen 0 und 60; die beiden Parameter sind sogenannte Nicht-Terminale einer hierarchisch aufgebauten Grammatik. Die zugehörigen semantischen Informationen werden durch die Attribute <Zahl_24>.val und <Zahl_60>.val repräsentiert, denen hier die zugehörigen Zahlwerte zur Berechnung der gesuchten Uhrzeit zugeordnet sind.

Dieser Ansatz funktioniert sehr gut, wenn die Struktur der informationstragenden Formulierungen a priori bekannt ist, also z.B. für Uhrzeiten, Daten, Ortsnamen oder Personennamen aus einer festgelegten Namensliste. Er versagt jedoch, wenn Informationen freier formuliert werden. Dies kann man sich an folgendem Beispiel verdeutlichen, bei dem das Sprachdialogsystem im Bereich der Kinoauskunft eingesetzt wird:
Der offizielle Titel eines James Bond Films aus dem Jahre 1999 heißt "James Bond - Die Welt ist nicht genug". Typische Anfragen zu diesem Film sind "Der neue Bond", "Die Welt ist nicht genug" oder "Der letzte Film mit Pierce Brosnan als James Bond". Die möglichen Formulierungen sind kaum vorhersehbar und zudem von den aktuell laufenden Filmen abhängig, die wöchentlich wechseln. Durch feste Regeln in einer Grammatik können nur eine oder wenige dieser Vielzahl von Formulierungen, die als Teilwortfolgen in Spracheingaben und in den von der Spracherkennungseinheit des Dialogsystems gelieferten Erkennungsergebnissen auftreten, identifiziert werden. Dies führt ohne zusätzliche Maßnahmen dazu, dass eine Vielzahl von Formulierungsvarianten, die nicht von der verwendeten Grammatik abgedeckt sind, nicht identifiziert und damit auch nicht durch Zuordnung von semantischen Informationen interpretiert werden können.
Der Erfindung liegt die Aufgabe zugrunde, ein Dialogsystem zu schaffen, das für ein breites Spektrum an Formulierungsalternativen bei Spracheingaben ein möglichst sicheres Identifizieren entsprechender Teilwortfolgen gewährleistet.
Die Aufgabe wird durch ein Dialogsystem gemäß Patentanspruch 1 gelöst.
Mit diesem Dialogsystem sind bedeutungstragende Teilwortfolgen eines von der Spracherkennungseinheit gelieferten Erkennungsergebnisses (das insbesondere als Wortgraph oder durch N beste Wortfolgenhypothesen vorliegt) auch dann mit hoher Sicherheit identifizierbar, wenn eine Vielzahl von Formulierungsvarianten in Frage kommt, deren syntaktische Strukturen dem Dialogsystem a priori nicht alle bekannt und damit auch nicht von der verwendeten Grammatik explizit erfassbar sind Die Identifizierung einer solchen Teilwortfolge gelingt dadurch, dass eine Bewertung mittels konkurrierender Sprachmodelle (z B. Bigramm- oder Trigramm-Sprachmodelle) erfolgt, die auf unterschiedlichen (Text-) Korpora trainiert sind. Vorzugsweise wird ein allgemeines und mindestens ein themenspezifisches Sprachmodell verwendet. Ein allgemeines Sprachmodell ist beispielsweise auf einem aus Artikeln von Tageszeitungen gebildeten Trainingskorpus trainiert. Beispiele für themenspezifische Sprachmodelle sind für die Anwendung Kinoauskunft ein Sprachmodell für Filmtitelinformationen und ein Sprachmodell für den Filminhalt betreffende Informationen (z. B. Schauspielernamen). Als Trainingskorpus für das Filmtitel-Sprachmodell kann die Zusammenstellung der Titel der aktuell laufenden Filme dienen. Als Trainingskorpus für das Sprachmodell für Filminhalte kann man die Zusammenstellung von Kurzbeschreibungen dieser Filme verwenden. Weist ein Sprachmodell eine gegenüber den anderen Spachmodellen höhere thematische Nähe zu einer (frei formulierten) Teilwortfolge auf, so wird ein solches Sprachmodell dieser Teilwortfolge eine höhere Wahrscheinlichkeit zuordnen als die anderen Sprachmodelle, insbesondere als ein allgemeines Spachmodell (vgl. Anspruch 2); dies wird zur Identifizierung der Teilwortfolge als bedeutungstragend ausgenutzt.
Bei der Erfindung wird der in bisherigen Dialogsystemen durch die Grammatik feste Zusammenhang zwischen der Identifizierung und Interpretation einer Teilwortfolge aufgehoben. Anspruch 3 gibt an, wie den identifizierten Teilwortfolgen semantische Informationen zugeordnet werden können. Da die Teilwortfolgen von der Grammatik des Dialogsystems nicht explizit erfasst sind, sind hierzu besondere Maßnahmen zu treffen. Hier wird vorgeschlagen, auf Datenbanken mit entsprechendem themenspezifischen Datenmaterial zuzugreifen. Eine identifizierte Teilwortfolge wird mit den Datenbankeinträgen verglichen und der Datenbankeintrag (ggf. mit einer Vielzahl zugeordneter Datenfelder) mit der größten Nähe zur identifizierten Teilwortfolge wird zur Ermittlung der semantischen Information der identifizierten Teilwortfolge verwendet, beispielsweise durch Zuordnung der Werte eines oder mehrerer der Datenfelder des ausgewählten Datenbankeintrags.
Anspruch 4 beschreibt ein entsprechend ausgestaltetes Verfahren zur Identifikation einer bedeutungstragenden Teilwortfolge.
Ausführungsbeispiele der Erfindung werden nachstehend anhand der Zeichnungen näher erläutert. Es zeigen:
   - Fig. 1: ein Blockschaltbild eines Sprachdialogsystems,
   - Fig. 2: einen von einer Spracherkennungseinheit des Sprachdialogsystems gelieferten Wortgraphen und
   - Fig. 3: einen in einer Sprachverstehenseinheit des Sprachdialogsystems erzeugten Konzeptgraphen

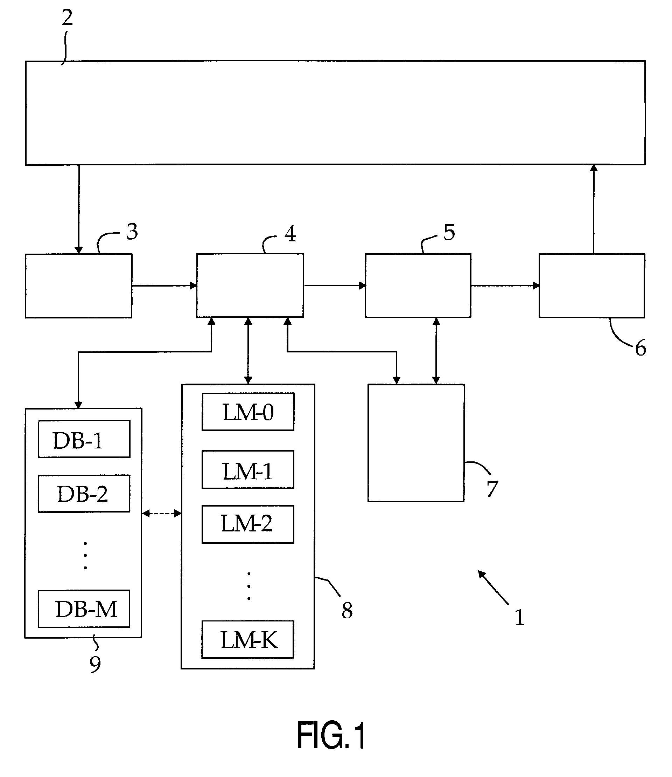

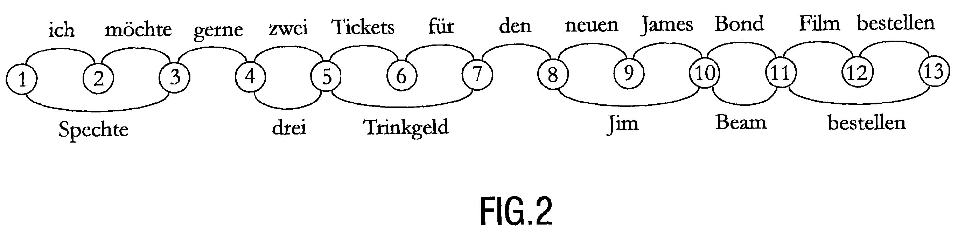

Fig.1 zeigt ein Sprachdialogsystem 1 mit einer Schnittstelle 2, einer Spracherkennungseinheit 3, einer Sprachverstehenesinheit 4, einer Dialogkontrolleinheit 5, einer Sprachausgabeeinheit 6 (mit Text-Sprache-Umsetzung) und einer Datenbank 7 mit anwendungsspezifischen Daten. Über die Schnittstelle 2 werden Spracheingaben eines Benutzers empfangen und an die Spracherkennungseinheit 3 weitergeleitet. Die Schnittstelle 2 stellt hier (Kinoauskunftssystem) eine Verbindung zu einem Benutzer insbesondere über ein Telefonnetz her. Die auf Hidden Markov Modellen (HMM) beruhende Spracherkennungseinheit 3 liefert als Erkennungsergebnis einen Wortgraphen (siehe Fig. 2), wobei im Rahmen der Erfindung aber grundsätzlich auch eine Verarbeitung einer oder mehrerer N bester Wortfolgenhypothesen in Betracht kommt. Das Erkennungsergebnis wird von der Sprachverstehenseinheit 4 ausgewertet, um die relevanten syntaktischen und semantischen Informationen im von der Spracherkennungseinheit 3 gelieferten Erkennungsergebnis zu bestimmen. Hierbei verwendet die Sprachverstehenseinheit 4 eine anwendungsspezifische Grammatik, die gegebenenfalls auch auf in der Datenbank 7 abgelegte anwendungsspezifische Daten zugreifen kann. Die von der Sprachverstehenseinheit 4 bestimmten Informationen werden der Dialogkontrolleinheit 5 zugeführt, die hieraus unter Berücksichtigung von anwendungsspezifischen Daten, die ebenfalls in der Datenbank 7 abgelegt sind, eine Systemantwort bestimmt, die der Sprachausgabeeinheit 6 zugeführt wird Bei der Generierung von Systemantworten verwendet die Dialogkontrolleinheit 5 a priori vorgegebene Antwortmuster, deren semantischer Inhalt und Syntax von den Informationen abhängt, die von der Sprachestehenseinheit 4 ermittelt und an die Dialogkontrolleinheit 5 geliefert werden. Einzelheiten zu den Komponenten 2 bis 7 lassen sich beispielsweise dem eingangs zitierten Aufsatz von A Kellner, B. Rüber, F. Seide und B.H. Tran entnehmen.
Das Sprachdialogsystem enthält weiterhin eine Menge 8 von Sprachmodellen LM-0, LM-1, LM-2, ..., LM-K Das Sprachmodell LM-0 stellt hierbei ein allgemeines Sprachmodell dar, dass auf einem Trainingstextkorpus mit allgemeinen themenunspezifischen Daten (z. B. aus Texten aus Tageszeitungen gebildet) trainiert wurde. Die anderen Sprachmodelle LM-1 bis LM-K stellen themenspezifische Sprachmodelle dar, die auf themenspezifischen Textkorpora trainiert wurden. Weiterhin enthält das Sprachdialogsystem 1 eine Menge 9 von Datenbanken DB-1, DB-2, ..., DB-M, in denen themenspezifische Informationen abgelegt sind. Die themenspezifischen Sprachmodelle und die themenspezifischen Datenbanken korrespondieren zueinander entsprechend den jeweiligen Themen, wobei eine Datenbank mehreren themenspezifischen Sprachmodellen zugeordnet sein kann. Ohne Beschränkung der Allgemeinheit wird im folgenden von lediglich zwei Sprachmodellen LM-0 und LM-1 und von einer dem Sprachmodell LM-1 zugeordneten Datenbank DB-1 ausgegangen.

Das erfindungsgemäße Sprachdialogsystem 1 ist zur Identifikation frei formulierter bedeutungstragender Teilwortfolgen, die Teil einer Spracheingabe sind und die am Ausgang der Spracherkennungseinheit 3 als Teil des von der Spracherkennungseinheit 3 gelieferten Erkennungsergebnisses vorliegen, in der Lage. Bedeutungstragende Teilwortfolgen werden in Dialogsystemen üblicherweise durch Nicht-Terminale (= Konzeptkomponenten) und Konzepte einer Grammatik repräsentiert.

Die Sprachverstehenseinheit 4 verwendet eine hierarchisch aufgebaute kontext-freie Grammatik, von der ein Auszug nachstehend angegeben ist.

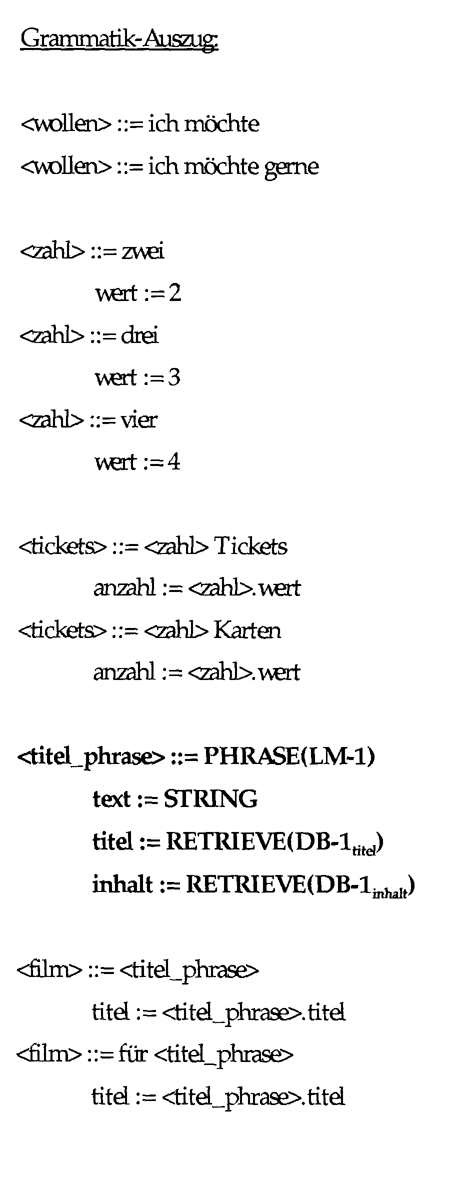

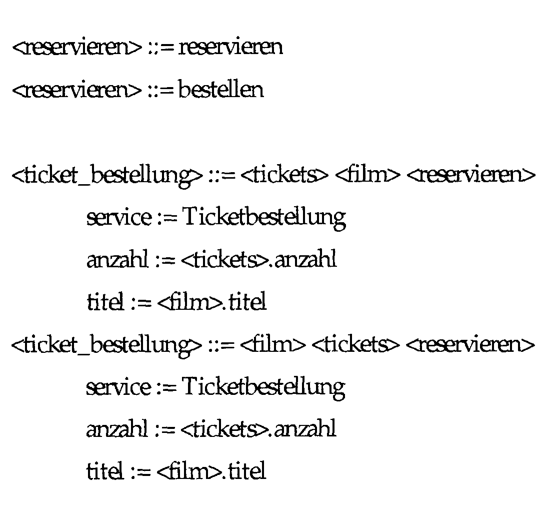

Das Zeichen "::=" weist auf die Definition eines Konzeptes oder eines Nicht-Terminals hin. Das Zeichen ":=" wird zur Definition eines eine semantische Information tragenden Attributes für ein Konzept oder ein Nicht-Terminal verwendet. Eine solche Grammatikstruktur ist grundsätzlich bekannt (siehe den Eingangs genannten Artikel AKellner, B.Rüber, F. Seide, B.H. Tran). Dabei erfolgt eine Identifizierung bedeutungstragender Teilwortfolgen mittels eines Top-Down-Parsers unter Anwendung der Grammatik, um so einen Konzeptgraphen zu bilden, dessen Kanten jeweils eine bedeutungstragende Teilwortfolge repräsentieren. Den Kanten des Konzeptgraphen sind Wahrscheinlichkeitswerte zugeordnet, die zur Ermittlung des besten (wahrscheinlichsten) Pfades durch den Konzeptgraphen dienen. Mittels der Grammatik erhält man die zugehörigen syntaktischen und/oder semantischen Informationen für diesen Pfad, die als Verarbeitungsergebnis der Sprachverstehenseinheit 4 an die Dialogkontrolleinheit 5 geliefert werden.

Für die Spracheingabe "Ich möchte gerne zwei Tickets für den neuen James Bond Film bestellen.", die eine mögliche Wortfolge innerhalb eines von der Spracherkennungseinheit 3 an die Sprachverstehenseinheit 4 gelieferten Wortgraphen (Fig 2 zeigt dessen Grundstruktur) ist, soll die Erfindung erläutert werden:

Die Teilwortfolge "Ich möchte gerne" ist durch das Nicht-Terminal <wollen> und die Teilwortfolge "zwei Tickets" durch das Nicht-Terminal <tickets> repräsentiert, wobei in diesem Nicht-Terminal wiederum das bezüglich des Wortes "zwei" erkannte Nicht-Terminal <zahl> enthalten ist. Dem Nicht-Terminal <zahl> ist wiederum das Attribut wert zugeordnet, dass als semantische Information den entsprechenden Zahlwert beschreibt. Dieses Attribut wert wird zur Bestimmung des Attributes anzahl verwendet, dass wiederum dem Nicht-Terminal <tickets> als semantische Information den entsprechenden Zahlwert zuordnet. Das Wort "bestellen" wird mittels des Nicht-Terminals <reservieren> identifiziert.

Zur Identifizierung und Interpretation einer zwischen zwei Knoten (hier zwischen Knoten 7 und 12) des Wortgraphen liegenden Teilwortfolge wie hier "den neuen James Bond Film", die nicht explizit von einem Konzept oder Nicht-Terminal der Grammatik erfassbar ist, ist die Grammatik gegenüber bisher verwendeten Grammatiken um einen neuen Typ von Nicht-Tenrdnalen erweitert, hier durch das Nicht-Terminal <titel_phrase>. Dieses Nicht-Terminal wird wiederum zur Definition des Nicht-Terminals <film> erdet, das wiederum zur Definition des Konzepts <ticket_bestellung> verwendet wird Mittels des Nicht-Terminals <titd_phrase> werden bedeutungstragende Teilwortfolgen, die einen frei formulierten Filmtitel enthalten, identifiziert und mittels der zugehörigen Attribute interpretiert. Bei einer freien Formulierung eines Filmtitels sind zahlreiche Formulierungsvarianten denkbar, die nicht alle vorhersagbar sind. Im vorliegenden Fall ist der korrekte Titel "James Bond - Die Welt ist nicht genug." Die benutzte entsprechende Teilwortfolge "den neuen James Bond Film" weicht stark von der korrekten Angabe des Filmtitels ab; sie ist nicht explizit von der verwendeten Grammatik erfasst. Trotzdem wird diese Teilwortfolge als Titelangabe identifiziert. Dies wird dadurch realisiert, dass eine Bewertung mittels mehrerer Sprachmodelle erfolgt, die in Fig. 1 mit LM-0 bis LM-K bezeichnet sind. Für die vorliegende Ausgestaltung des Dialogsystems 1 als Kinoauskunftssystem ist das Sprachmodell LM-0 ein allgemeines Sprachmodell, dass auf einem allgemeinen themenunspezifischen Textkorpus trainiert wurde. Das Sprachmodell LM-1 ist ein themenspezifisches Sprachmodell, das auf einem themenspezifischen Textkorpus, der hier die (korrekten) Titel und Kurzbeschreibungen aller aktuell laufenden Filme enthält, trainiert wurde. Alternativ dazu ist, Teilwortfolgen durch syntaktische Regeln der bisher bekannten Art zu erfassen (was für eine Wortfolge wie "den neuen James Bond Film" nicht gelingt), erfolgt in der Sprachverstehenseinheit 4 eine Bewertung von Teilwortfolgen mittels der durch Block 8 zusammengefassten Sprachmodelle, d.h. hier durch das allgemeine Sprachmodell LM-0 und das filmtitelspezifische Sprachmodell LM-1. Bei der Teilwortfolge zwischen den Knoten 7 und 12 liefert das Sprachmodell LM-1 als Bewertungsergebnis eine Wahrscheinlichkeit, die größer ist als die Wahrscheinlichkeit, die das allgemeine Sprachmodell LM-0 als Bewertungsergebnis ausgibt. Auf diese Weise wird die Teilwortfolge "den neuen James Bond Film" als Nicht-Terminal <titd_phrase> mit der variablen Syntax PHRASE(LM-1) identifiziert. Der aus der akustischen Bewertung durch die Spracherkennungseinheit 3 resultierende Wahrscheinlichkeitswert für die betreffende Teilwortfolge und der vom Sprachmodell LM-1 für die betreffende Teilwortfolge gelieferte Wahrscheinlichkeitswert werden kombiniert (z. B. durch Addieren der "scores"), wobei vorzugsweise heuristisch ermittelte Gewichte eingesetzt werden. Der resultierende Wahrscheinlichkeitswert wird dem Nicht-Terminal "titel_phrase" zugeordnet.

Dem Nicht-Terminal <titel_phrase> werden weiterhin durch drei Attribute text, titel und inhalt drei semantische Informationen zugeordnet. Dabei verweist das Attribut text auf die identifizierte Wortfolge als solche (STRING). Die semantischen Informationen für die Attribute titel und inhalt werden mit Hilfe einer durch RETRIEVE bezeichneten Informationssuche ermittelt, bei deren Anwendung auf die Datenbank DB-1 zugegriffen wird. Die Datenbank DB-1 ist eine themenspezifische Datenbank, in der kinofilmspezifische Daten gespeichert sind. Unter jedem Datenbankeintrag sind in separaten Feldern DB-1ₜᵢₜₑₗ und DB-1ᵢₙₕₐₗₜ einerseits der jeweilige Filmtitel (mit der korrekten Bezeichnung) und andererseits für jeden Filmtitel eine kurze Erläuterung (hier. "Der neue James Bond Film mit Pierce Brosnan als Agent 007") gespeichert. Für die Attribute titel und inhalt wird nun der Datenbankeintrag ermittelt, der der identifizierten Teilwortfolge am ähnlichsten ist (in Ausgestaltungen können auch mehrere ähnliche Datenbankeinträge ermittelt werden), wobei bekannte Suchverfahren eingesetzt werden, z. B. ein Information-Retrieval-Verfahren wie in B. Carpenter, J. Chu-Carroll, "Natural Language Call Routing: ARobust, Self-Organizing Approach", ICSLP 1998 beschrieben. Ist ein Datenbankeintrag ermittelt worden, wird aus dem Datenbankeintrag das Feld DB-1ₜᵢₜₑₗ ausgelesen und dem Attribut titel zugewiesen sowie das Feld DB-1ᵢₙₕₐₗₜ mit der kurzen Erläuterung zum Film ausgelesen und dem Attribut inhalt zugewiesen.

Schließlich wird das so bestimmte Nicht-Terminal <titel_phrase> zur Bestimmung des Nicht-Terminals <film> verwendet.

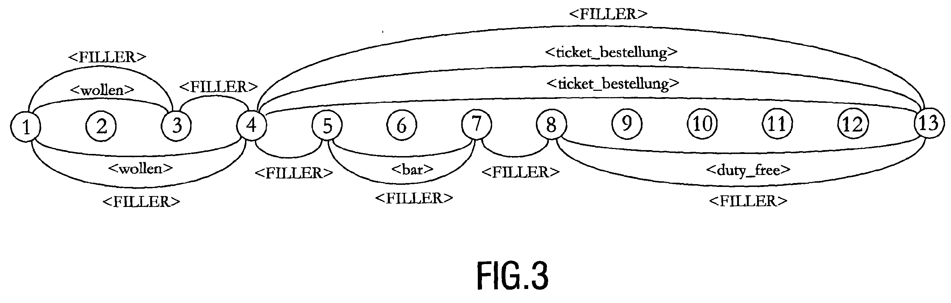

Aus den auf die obige Weise identifizierten und interpretierten Nicht-Terminalen wird das Konzept <ticket_bestellung> gebildet, dessen Attributen service, Anzahl und titel die semantischen Inhalte Ticketbestellung, <tickets>.anzahl bzw.<film>.titel zugeordnet werden. Die Realisierungen des Konzepts <ticket_bestellung> sind Teil des Konzeptgraphen gemäß Fig 3.

Der Wortgraph nach Fig. 2 und der Konzeptgraph nach Fig 3 sind aus Gründen der Übersichtlichkeit sehr vereinfacht dargestellt. In der Praxis weisen die Graphen sehr viel mehr Kanten auf, was aber in Bezug auf die Erfindung nicht wesentlich ist. Bei den obigen Ausführungen wurde davon ausgegangen, dass die Spracherkennungseinheit 3 als Erkennungsergebnis einen Wortgraphen ausgibt. Auch dies ist für die Erfindung nicht zwingend So kommt auch eine Verarbeitung einer Liste N bester Wortfolgen- bzw. Satzhypothesen anstelle eines Wortgraphen in Betracht. Auch ist bei frei formulierten Teilwortfolgen nicht immer eine Datenbankabfrage zur Ermittlung semantischer Inhalte erforderlich Dies hängt von den jeweiligen Vorgaben für das Dialogsystem ab. Grundsätzlich sind durch Aufnahme zusätzlicher Datenbankfelder beliebig viele semantische Informationen vorgebbar, die einer Teilwortfolge zuordenbar sind.

Die Struktur des Konzeptgraphen gemäß Fig. 3 ist nachstehend noch tabellarisch angegeben. Die beiden linken Spalten geben die Konzeptknoten (Grenzen zwischen den Konzepten) an. Daneben stehen die Konzepte in spitzen Klammern mit zugsordneten etwaigen Attributen plus zugehöriger semantischer Inhalte Korrespondierende Teilwortfolgen des Wortgraphen sind in runden Klammern hinzugefügt.

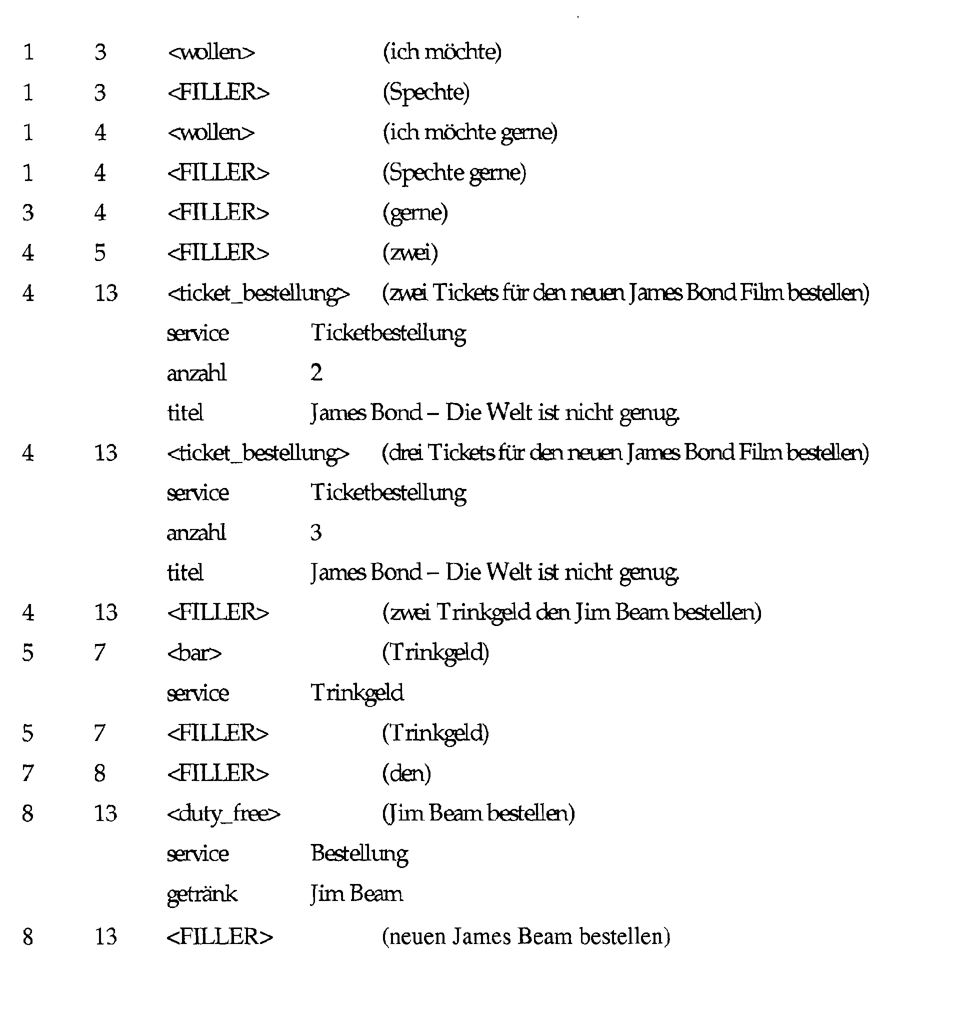

## Patentansprüche

1. Sprachdialogsystem (1) mit einer Sprachverstehenseinheit (4), bei der zur Identifizierung einer bedeutungstragenden Teilwortfolge aus einem von einer Spacherkennungseinheit (3) gelieferten Erkennungsergebnis, das für eine dem Sprachdialogsystem (1) zugeführte Wortfolge ermittelt wurde, eine Bewertung der Teilwortfolge mittels unterschiedlicher Sprachmodelle (8) vorgesehen ist.

2. Sprachdialogsystem nach Anspruch 1,
**dadurch gekennzeichnet,**
**dass** zur Bewertung der Teilwortfolge ein allgemeines Sprachmodell (LM-0) und mindestens ein themenspezifisches Sprachmodell (LM-1, ..., LM-K) vorgesehen sind.

3. Sprachdialogsystem nach Anspruch 2,
**dadurch gekennzeichnet,**
**dass** die Menge unterschiedlicher Sprachmodelle (8) mindestens ein themenspezifisches Sprachmodell (LM-1, ..., LM-K) enthält, dem eine Datenbank (DB-1, ..., DB-M) mit entsprechendem themenspezifischen Datenmaterial zugeordnet ist, das zur Ermittlung der in der Teilwortfolge enthaltenen semantischen Information dient.

4. Verfahren zur Extraktion einer bedeutungstragenden Teilwortfolge aus einem von einer Spracherkennungseinheit (3) eines Sprachdialogsystems (1) gelieferten Erkennungsergebnis, bei dem eine Bewertung der Teilwortfolge mit unterschiedlichen Sprachmodellen (8) in einer Sprachverstehenseinheit (4) des Sprachdialogsystems (1) vorgesehen ist.
